# FASCICULE DE BREVET EUROPEEN

(11) **EP 2 825 785 B1**
(45) Date de publication et mention de la délivrance du brevet: **11.05.2016**
(21) Numéro de dépôt: 13712883.1
(22) Date de dépôt: 01.03.2013
(51) Int. Cl.: F16D 3/08, F04B 1/20

(54) **MACHINE HYDRAULIQUE A CYLINDREE VARIABLE, NOTAMMENT POUR VEHICULE AUTOMOBILE**
HYDRAULISCHER VERSTELLMOTOR, INSBESONDERE FÜR EIN KRAFTFAHRZEUG
HYDRAULIC VARIABLE DISPLACEMENT MACHINE, IN PARTICULAR FOR A MOTOR VEHICLE

(30) Priorité: 14.03.2012 FR 1252310
(43) Date de publication de la demande: 21.01.2015
(73) Titulaire: Technoboost, 75116 Paris (FR)
(72) Inventeur: GIANNONI, Marc, F-75009 Paris (FR); GROULT, Antonin, F-78510 Triel sur Seine (FR)
(74) Mandataire: Rosenberg, Muriel Sylvie
(86) Numéro de dépôt international: PCT/FR2013/050446
(87) Numéro de publication internationale: WO 2013/135991

(56) Documents cités:
- EP-A2- 0 327 012
- EP-A2- 0 458 208
- JP-A- 63 013 921

## Description

La présente invention concerne une machine hydraulique à cylindrée variable pouvant fonctionner en moteur ou en pompe, en particulier pour véhicule hybride, ainsi qu'un véhicule hybride équipé d'une telle machine hydraulique.

Certain véhicules du type hybride comportent une machine hydraulique réversible, pouvant fonctionner en moteur et en pompe, faisant partie d'une chaîne de traction qui délivre un couple sur les roues motrices en prélevant une pression hydraulique dans un accumulateur, et qui recharge ces accumulateurs lors des phases de freinage en récupérant une énergie cinétique du véhicule.

Un type de machine hydraulique connu, appelé machine à piston patin, comporte un arbre d'entrée motorisé, qui entraîne en rotation un barillet comportant une succession de pistons coulissant dans des cylindres radiaux, pour faire varier à chaque tour de l'arbre le volume intérieur de ces cylindres, afin d'aspirer et de refouler sous pression un fluide.

La machine comporte un plateau entourant l'arbre d'entrée, pouvant prendre différentes inclinaisons sous l'effet d'une commande d'inclinaison. Le plateau inclinable comporte une butée axiale qui est en appui sur les pistons, afin de réaliser à chaque tour du barillet un cycle complet de mouvement de chacun des pistons, permettant de refouler une quantité de fluide sous pression dépendant de la cylindrée de cette pompe donnée par l'inclinaison du plateau.

On peut aller ainsi d'une cylindrée nulle dans le cas d'un plateau disposé perpendiculairement à l'arbre, à une cylindrée maximale dans le cas où son inclinaison est la plus forte.

Un problème qui se pose avec ce type de machine à piston patin, est que l'inclinaison maximum du plateau ne peut généralement pas dépasser des valeurs comprises entre 18° et 25°, ce qui limite la course des pistons, et donc la cylindrée pour un nombre de pistons et un diamètre de ces pistons qui sont définis.

Un autre type de machine connu, appelé machine à axe brisé, présenté notamment dans le document EP-B1-0458208, comporte un barillet comprenant des cylindres radiaux recevant chacun un piston coulissant dedans. Chaque piston se prolonge par une bielle comprenant à son extrémité une rotule liée à un plateau fixé sur l'extrémité de l'arbre d'entrée.

En réglant l'inclinaison de l'axe du barillet par rapport à l'axe de l'arbre d'entrée, on a une course variable de chacun des pistons donnant un réglage de la cylindrée, qui est nulle quand le barillet est aligné sur l'arbre d'entrée, et qui est maximale quand l'inclinaison est la plus forte. On obtient une machine qui peut comporter une cylindrée plus importante par rapport aux machines à piston patin, l'inclinaison du barillet pouvant être de l'ordre de 35° à 40°.

Ces deux types de machines peuvent fonctionner en pompe quand l'arbre d'entrée est entraîné par une motorisation, et en moteur quand un débit de fluide sous pression lui est délivré.

Un problème qui se pose avec le type de machine à axe brisé, est que le plateau fixé sur l'arbre d'entrée reçoit en réaction une charge axiale importante venant des pistons, qu'il faut équilibrer par des paliers axiaux de cet arbre comprenant une forte capacité.

De plus ce type de machine comporte un encombrement extérieur relativement important, donné par les paliers axiaux de l'arbre d'entrée, et par le barillet pouvant prendre différentes inclinaisons. On notera qu'à cause de l'inclinaison de ce barillet d'un côté, le volume occupé ne comporte pas de symétrie de révolution autour de l'arbre d'entrée, ce qui peut poser des problèmes d'implantation dans le cas où la place disponible est limitée.

La présente invention a notamment pour but d'éviter ces inconvénients de la technique antérieure.

Elle propose à cet effet une machine hydraulique à cylindrée variable, notamment pour véhicule automobile, comportant un barillet lié en rotation à un arbre d'entrée, comprenant des cylindres axiaux recevant chacun un piston, et des bielles disposant de liaisons rotulantes, reliant ces pistons à un plateau inclinable, caractérisée en ce que le plateau inclinable supporté par une butée axiale de réaction, est lié en rotation à l'arbre d'entrée par un joint homocinétique à billes.

Un avantage de cette machine hydraulique est que le barillet restant aligné sur l'arbre d'entrée, la machine est relativement compacte, et comporte un encombrement général comprenant une symétrie de révolution autour de l'arbre d'entrée comme pour les machines à piston patin, avec un plateau de réaction pouvant disposer d'une inclinaison maximale importante, est donc d'une cylindrée plus élevée comme pour les machines à axe brisé.

La machine hydraulique selon l'invention peut de plus comporter une ou plusieurs des caractéristiques suivantes, qui peuvent être combinées entre elles.

Avantageusement, l'arbre d'entrée comporte une surface extérieure sphérique centrée sur un centre O disposé sur l'axe de cet arbre, comprenant une série de rainures orientées globalement axialement, recevant chacune une bille.

Avantageusement, le plateau inclinable comporte suivant son axe une forme sphérique de centre O, comprenant sur sa surface intérieure une série de rainures complémentaires orientées globalement axialement, recevant chacune une bille.

Avantageusement, les bielles comportent des rotules à chacune de leurs extrémités.

En particulier, la butée axiale de réaction supportant le plateau inclinable, peut comporter un roulement.

Avantageusement, la butée axiale de réaction comporte un système de réglage de l'inclinaison qui est continûment variable.

Avantageusement, l'arbre d'entrée est porté par deux paliers espacés axialement, se trouvant aux extrémités du corps contenant cette machine.

Chaque palier supportant l'arbre d'entrée, peut comporter un roulement.

Avantageusement, un ressort de pression prend appui sur l'arbre d'entrée pour exercer une force axiale sur le barillet, afin d'appliquer une pression de ce barillet sur une platine comportant des perçages permettant le passage du fluide.

L'invention a aussi pour objet un véhicule hybride disposant d'une chaîne de traction, comportant une machine hydraulique comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma en coupe axiale d'une machine hydraulique selon l'invention ; et
- la figure 2 est une vue en coupe axiale de cette machine.

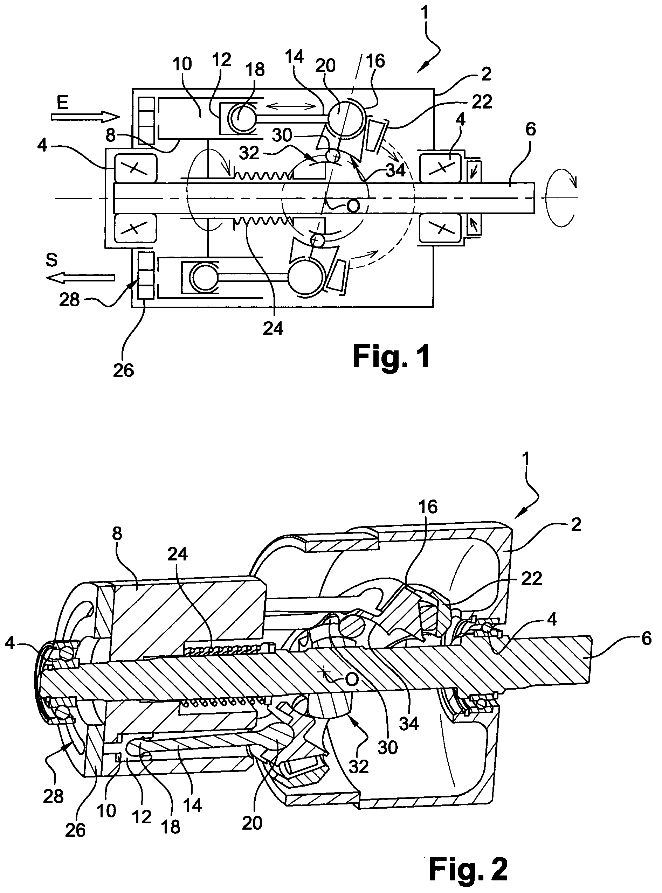

Les figures 1 et 2 présentent une machine hydraulique réversible 1, comprenant un corps globalement cylindrique 2 comportant à chacune de ses extrémités suivant son axe, un palier 4 disposant d'un roulement supportant un arbre d'entrée 6.

Un barillet 8 lié en rotation à l'arbre d'entrée 6, comporte une succession de cylindres 10 disposés parallèlement à l'axe, et régulièrement répartis sur le pourtour de ce barillet.

Un ressort hélicoïdal de pression 24 prend appui du côté droit sur un épaulement de l'arbre d'entrée 6, pour exercer sur le barillet 8 une force axiale dirigée vers la gauche, afin de maintenir une pression constante de la face transversale gauche de ce barillet, sur une face polie d'une platine circulaire 26 se trouvant au fond du corps 2.

La platine circulaire 26 comporte deux ouvertures 28 formant chacune un arc de cercle centré sur l'axe, pour réaliser une entrée « E » et une sortie « S » de fluide communiquant avec un perçage se trouvant au fond de chaque cylindre 10, quand ce cylindre se trouve en face de cette ouverture. La pression du barillet 8 sur la platine circulaire 26, appliquée par le ressort de pression 24, permet d'assurer une étanchéité entre le cylindre 10 et les ouvertures 28.

Chaque cylindre comporte un piston 12 relié par une bielle 14 à un plateau inclinable 16 autour d'un centre O, qui se trouve sur l'axe de l'arbre d'entrée 6.

Chaque bielle 14 disposée sensiblement suivant l'axe de son cylindre 10, comporte à une extrémité une première rotule 20 qui la relie au plateau 16, et à l'autre extrémité une deuxième rotule 18 qui la relie au piston 12, de manière à permettre une petite inclinaison de ces bielles dépendant de l'angle du plateau.

Le plateau 16 prend appui axialement du côté droit sur une butée de réaction à rouleaux coniques 22, qui elle-même s'appuie sur le corps 2 par un dispositif non représenté, comprenant un système de réglage de l'inclinaison de ce plateau continûment variable. La butée de réaction 22 permet d'exercer un effort axial de réaction sur le plateau inclinable 16, de manière à pouvoir transmettre aux bielles 14 une force correspondant aux pressions du fluide se trouvant dans les cylindres 10, qui s'appliquent sur les pistons 12.

L'arbre d'entrée 6 comporte une surface extérieure sphérique 32, centrée sur le centre O, comprenant une série de rainures orientées globalement axialement. Le plateau inclinable 16 comporte au centre une forme sphérique 34 de centre O, comprenant sur sa surface intérieure une série de rainures complémentaires orientées globalement axialement.

Chaque couple de rainures disposées sur l'arbre 6 et sur le plateau 16, qui sont alignées l'une sur l'autre, reçoit une bille 30 qui est engagée partiellement dans chacune de ces rainures. Une cage non représentée, maintient les billes 30 alignées suivant un plan commun passant par le centre O.

Les billes 30 engagées dans les deux rainures à la fois, permettent de transmettre un couple important entre l'arbre d'entrée 6 et le plateau inclinable 16, pour entraîner les pistons 12 dans leurs courses dans le cas d'un fonctionnement en pompe, ou pour recevoir le couple venant du plateau et généré par ces pistons dans le cas d'un fonctionnement en moteur.

On réalise ainsi un joint homocinétique à billes, suivant un type couramment utilisé pour les arbres de transmission aux roues des véhicules, qui comporte une capacité de couple élevé, et une bonne compacité. De plus ce joint homocinétique peut bénéficier de procédés de fabrication en grandes séries largement répandus, qui sont économiques.

Par ailleurs, le joint homocinétique à billes comporte une possibilité d'inclinaison élevée, de l'ordre de 35° à 40°, qui permet de réaliser une course importante des pistons 12, et de donner à cette machine hydraulique 1 une forte cylindrée avec une bonne compacité. En particulier, l'encombrement de cette machine hydraulique 1 peut rester inscrit dans un encombrement globalement cylindrique, centré sur l'arbre d'entrée 6.

Par ailleurs, le rendement de la machine hydraulique 1 comportant très peu de frottement, grâce notamment à la butée de réaction 22 comprenant un roulement, peut être élevé. On notera que l'arbre d'entrée 6 est porté par deux paliers 4 espacés, se trouvant aux extrémités du corps 2, ce qui permet d'obtenir une bonne rigidité du montage de cet arbre, avec des roulements de taille réduite.

En variante et suivant l'invention, la machine hydraulique 1 peut comporter des pistons 12 comprenant ou pas des segments d'étanchéité, des liaisons rotulantes 18, 20 qui peuvent être réalisées de différentes manières, et une butée axiale de réaction 22 qui peut comporter différents types d'éléments roulants.

Le joint homocinétique à billes peut comporter un nombre variable de billes 30 comportant chacune un diamètre adapté, en fonction du couple à transmettre. La commande du plateau inclinable 16, peut comporter un actionneur mécanique, hydraulique ou électrique.

Grâce à un bon rendement, ainsi qu'à un poids réduit et une bonne compacité facilitant l'implantation dans un véhicule, cette machine hydraulique peut s'utiliser avantageusement dans un véhicule pour réaliser une motorisation hybride.

## Revendications

1. Machine hydraulique à cylindrée variable, notamment pour véhicule automobile, comportant un barillet (8) lié en rotation à un arbre d'entrée (6), comprenant des cylindres axiaux (10) recevant chacun un piston (12), et des bielles (14) disposant de liaisons rotulantes (18, 20), reliant ces pistons à un plateau inclinable (16), **caractérisée en ce que** le plateau inclinable (16) supporté par une butée axiale de réaction (22), est lié en rotation à l'arbre d'entrée (6) par un joint homocinétique à billes (30).

2. Machine hydraulique selon la revendication 1, **caractérisée en ce que** l'arbre d'entrée (6) comporte une surface extérieure sphérique (32) centrée sur un centre (O) disposé sur l'axe de cet arbre, comprenant une série de rainures orientées globalement axialement, recevant chacune une bille (30).

3. Machine hydraulique selon la revendication 2, **caractérisée en ce que** le plateau inclinable (16) comporte une forme sphérique (34) de centre (O), comprenant sur sa surface intérieure une série de rainures complémentaires orientées globalement axialement, recevant chacune une bille (30).

4. Machine hydraulique selon l'une quelconque des revendications précédentes, **caractérisée en ce que** les bielles (14) comportent des rotules (18, 20) à chacune de leurs extrémités.

5. Machine hydraulique selon l'une quelconque des revendications précédentes, **caractérisée en ce que** la butée axiale de réaction supportant le plateau inclinable (16), comporte un roulement (22).

6. Machine hydraulique selon l'une quelconque des revendications précédentes, **caractérisée en ce que** la butée axiale de réaction (22) comporte un système de réglage de l'inclinaison qui est continûment variable.

7. Machine hydraulique selon l'une quelconque des revendications précédentes, **caractérisée en ce que** l'arbre d'entrée (6) est porté par deux paliers (4) espacés axialement, se trouvant aux extrémités du corps (2) contenant cette machine.

8. Machine hydraulique selon la revendication 7, **caractérisée en ce que** chaque palier (4) supportant l'arbre d'entrée (6), comporte un roulement.

9. Machine hydraulique selon l'une quelconque des revendications précédentes, **caractérisée en ce qu'**un ressort de pression (24) prend appui sur l'arbre d'entrée (6) pour exercer une force axiale sur le barillet (8), afin d'appliquer une pression de ce barillet sur une platine (26) comportant des perçages (28) permettant le passage du fluide.

10. Véhicule hybride disposant d'une chaîne de traction comportant une machine hydraulique (1), **caractérisé en ce que** cette machine hydraulique est réalisée selon l'une quelconque des revendications précédentes.

## Patentansprüche

1. Hydraulischer Verstellmotor, insbesondere für Kraftfahrzeug, der eine Trommel (8) umfasst, die in Drehung mit einer Eingangswelle (6) verbunden ist, die axiale Zylinder (10) umfasst, die jeweils einen Kolben (12) aufnehmen, und Pleuel (14), die über Gelenkverbindungen (18, 20) verfügen, die diese Kolben mit einer neigbaren Platte (16) verbinden, **dadurch gekennzeichnet, dass** die neigbare Platte (16), die von einem axialen Reaktionsanschlag (22) getragen wird, in Drehung mit der Eingangswelle (6) durch ein Gleichlaufgelenk mit Kugeln (30) verbunden ist.

2. Hydraulischer Motor nach Anspruch 1, **dadurch gekennzeichnet, dass** die Eingangswelle (6) eine kugelförmige äußere Oberfläche (32) umfasst, die auf eine Mitte (0) zentriert ist, die auf der Achse dieser Welle angeordnet ist, die eine Reihe von Nuten umfasst, die allgemein axial ausgerichtet sind, die jeweils eine Kugel (30) aufnehmen.

3. Hydraulischer Motor nach Anspruch 2, **dadurch gekennzeichnet, dass** die neigbare Platte (16) eine Kugelform (34) mit der Mitte (0) umfasst, die auf ihrer inneren Oberfläche eine Reihe von komplementären Nuten umfasst, die insgesamt axial ausgerichtet sind, die jeweils eine Kugel aufnehmen (30).

4. Hydraulischer Motor nach einem der vorhergehenden Ansprüche, **dadurch gekennzeichnet, dass** die Kugeln (14) Gelenke (18, 20) an jedem ihrer Enden aufweisen.

5. Hydraulischer Motor nach einem der vorhergehenden Ansprüche, **dadurch gekennzeichnet, dass** der axiale Reaktionsanschlag, der die neigbare Platte (16) trägt, ein Kugellager (22) umfasst.

6. Hydraulischer Motor nach einem der vorhergehenden Ansprüche, **dadurch gekennzeichnet, dass** der axiale Reaktionsanschlag (22) ein Einstellsystem der Neigung, das stufenlos variabel ist, umfasst.

7. Hydraulischer Motor nach einem der vorhergehenden Ansprüche, **dadurch gekennzeichnet, dass** die Eingangswelle (6) von zwei Lagern (4), die axial beabstandet sind, die sich an den Enden des Körpers (2), der diesen Motor enthält, befinden, getragen wird.

8. Hydraulischer Motor nach Anspruch 7, **dadurch gekennzeichnet, dass** jedes Lager (4), das die Eingangswelle (6) trägt, ein Kugellager umfasst.

9. Hydraulischer Motor nach einem der vorhergehenden Ansprüche, **dadurch gekennzeichnet, dass** eine Druckfeder (24) auf der Eingangswelle (6) aufliegt, um eine axiale Kraft auf die Trommel (8) auszuüben, um einen Druck dieser Trommel auf eine Platte (26) anzulegen, die Bohrungen (28) umfasst, die das Durchgehen des Fluids erlauben.

10. Hybridfahrzeug, das über einen Traktionsstrang verfügt, der einen hydraulischen Motor (1) umfasst, **dadurch gekennzeichnet, dass** dieser hydraulische Motor nach einem der vorhergehenden Ansprüche hergestellt ist.

## Claims

1. A hydraulic variable displacement machine, in particular for a motor vehicle, comprising a barrel (8) rotationally connected to an intake shaft (6), comprising axial cylinders (10) each accommodating a piston (12), and rods (14) having swivelling connections (18, 20) connecting said pistons to a tiltable plate (16), **characterized in that** the tiltable plate (16) supported by an axial reaction stop (22), is rotationally connected to the intake shaft (6) by a constant-velocity ball joint (30).

2. The hydraulic machine according to Claim 1, **characterized in that** the intake shaft (6) comprises an exterior spherical surface (32) centred on a centre (0) disposed on the axis of this shaft, including a series of grooves oriented overall axially, each receiving a ball (30).

3. The hydraulic machine according to Claim 2, **characterized in that** the tiltable plate (16) comprises a spherical shape (34) of centre (0), including on its interior surface a series of complementary grooves oriented overall axially, each receiving a ball (30).

4. The hydraulic machine according to any one of the preceding claims, **characterized in that** the rods (14) comprise swivel joints (18, 20) at each of their ends.

5. The hydraulic machine according to any one of the preceding claims, **characterized in that** the axial reaction stop supporting the tiltable plate (16) comprises a rolling bearing (22).

6. The hydraulic machine according to any one of the preceding claims, **characterized in that** the axial reaction stop (22) comprises a system for adjusting the inclination which is continuously variable.

7. The hydraulic machine according to any one of the preceding claims, **characterized in that** the intake shaft (6) is carried by two axially spaced bearings (4), situated at the ends of the body (2) containing this machine.

8. The hydraulic machine according to Claim 7, **characterized in that** each bearing (4) supporting the intake shaft (6) comprises a rolling bearing.

9. The hydraulic machine according to any one of the preceding claims, **characterized in that** a compression spring (24) rests on the intake shaft (6) to exert an axial force on the barrel (8), so as to apply a pressure of this barrel on a plate (26) comprising drilled holes (28) permitting the passage of the fluid.

10. A hybrid vehicle having a powertrain comprising a hydraulic machine (1), **characterized in that** this hydraulic machine is realized according to any one of the preceding claims.
